# EUROPEAN PATENT APPLICATION

(11) **EP 3 819 103 A1**
(43) Date of publication of application: **12.05.2021**
(21) Application number: 19830857.9
(22) Date of filing: 05.06.2019
(51) Int. Cl.: B29C 64/393, B29C 64/135

(54) **THREE-DIMENSIONAL-MODELING DEVICE, CONTROL DEVICE, AND METHOD FOR MANUFACTURING MODELED OBJECT**

(30) Priority: 05.07.2018 JP 2018128070
(71) Applicant: Mitsui Chemicals, Inc., Minato-ku Tokyo 105-7122 (JP)
(72) Inventor: SHIODE Hirohisa, Sodegaura-shi, Chiba 299-0265 (JP); YAMANAKA Hiroshi, Sodegaura-shi, Chiba 299-0265 (JP)
(74) Representative: Hoffmann Eitle
(86) International application number: PCT/JP2019/022281
(87) International publication number: WO 2020/008790

(57) **Abstract**

A control unit (140) controls a position of a carrier (120) and an irradiation unit (130) to form a modeled object (200) obtained by curing a photocurable composition (20). Here, the control unit (140) irradiates the photocurable composition (20) with light from the irradiation unit (130) while continuously or intermittently changing a distance between the carrier (120) and a light transmission portion (112) to form the modeled object (200) and a support portion (210) which connects the carrier (120) and the modeled object (200) . In addition, the control unit (140) controls a modeling condition to make a modeling condition when modeling a joint portion (211) of the support portion (210) with the carrier (120) be a condition in which the photocurable composition (20) is easily cured rather than a modeling condition when modeling a first region, in which an area of a cross section parallel to the surface (113) of the light transmission portion (112) is the largest, in the modeled object (200) .

## Description

### TECHNICAL FIELD

The present invention relates to a three-dimensional modeling apparatus, a control apparatus, and a method for manufacturing a modeled object.

### BACKGROUND ART

One of modeled object manufacturing apparatuses is a 3D printer for modeling by curing a composition for each cross section based on three-dimensional data of the modeled object.

Patent Document 1 discloses a technique for forming a three-dimensional object on a carrier by irradiating a polymerizable liquid between the carrier and a build plate with light via the build plate.

Patent Document 2 discloses a technique for blowing to a curable resin layer in order to perform high-precision and high-speed photo modeling by suppressing a change in a temperature of the cured resin layer due to photocuring reaction.

### RELATED DOCUMENT

### PATENT DOCUMENT

[Patent Document 1] PCT Japanese Translation Patent Publication No. 2016-509963
[Patent Document 2] Japanese Unexamined Patent Publication No. 2005-131938

### SUMMARY OF THE INVENTION

### TECHNICAL PROBLEM

In a modeling apparatus as disclosed in Patent Document 1, there is case where a desired modeled object is not directly formed on a carrier and a structure for connection is interposed. In this case, while it is important to control a modeling condition of the modeled object as in Patent Document 2, a state of the structure for connection affects accuracy of the modeled object.

The present invention provides a technique for manufacturing the modeled object with a high shape accuracy by using a three-dimensional modeling apparatus.

### SOLUTION TO PROBLEM

According to a first aspect of the present disclosure, there is provided a three-dimensional modeling apparatus including
a container that accommodates a photocurable composition and at least a part of which includes a light transmission portion,
a carrier that is configured to face a surface of the light transmission portion and to have a variable distance with respect to the light transmission portion,
an irradiation unit that irradiates the photocurable composition with light via the light transmission portion, and
a control unit that controls a position of the carrier and the irradiation unit to form a modeled object obtained by curing the photocurable composition,
in which the control unit
irradiates the photocurable composition with light from the irradiation unit while continuously or intermittently changing a distance between the carrier and the light transmission portion to form the modeled object and a support portion that connects the carrier and the modeled object, and
controls a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.

According to a second aspect of the present disclosure,
there is provided a control apparatus of a three-dimensional modeling apparatus,
in which the three-dimensional modeling apparatus includes
a container that accommodates a photocurable composition and at least a part of which includes a light transmission portion,
a carrier that is configured to face a surface of the light transmission portion and to have a variable distance with respect to the light transmission portion, and
an irradiation unit that irradiates the photocurable composition with light via the light transmission portion,
the control apparatus including a control unit that controls a position of the carrier and the irradiation unit to form a modeled object by curing the photocurable composition,
in which the control unit
irradiates the photocurable composition with light from the irradiation unit while continuously or intermittently changing a distance between the carrier and the light transmission portion to form the modeled object and a support portion that connects the carrier and the modeled object, and
controls a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.

According to a third aspect of the present disclosure,
there is provided a method for manufacturing a modeled object using a three-dimensional modeling apparatus,
in which the three-dimensional modeling apparatus includes
a container that accommodates a photocurable composition and at least a part of which includes a light transmission portion,
a carrier that is configured to face a surface of the light transmission portion and to have a variable distance with respect to the light transmission portion,
an irradiation unit that irradiates the photocurable composition with light via the light transmission portion, and
a control unit that controls a position of the carrier and the irradiation unit to form the modeled object obtained by curing the photocurable composition, the method including:
by the control unit
irradiating the photocurable composition with light from the irradiation unit while continuously or intermittently changing a distance between the carrier and the light transmission portion to form the modeled object and a support portion that connects the carrier and the modeled object; and
controlling a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.

### ADVANTAGEOUS EFFECTS OF INVENTION

According to the present invention, it is possible to provide a technique for manufacturing a modeled object with a high shape accuracy by using a three-dimensional modeling apparatus.

### BRIEF DESCRIPTION OF THE DRAWINGS

The above-described object, other objects, features and advantages will be further clarified by the preferred embodiments described below and the accompanying drawings below, but are not limited to the detailed embodiments and the drawings.

Fig. 1 is a diagram illustrating a configuration of a three-dimensional modeling apparatus according to a first embodiment.
Fig. 2 is a diagram illustrating structures of a modeled object and a support portion.
Fig. 3 is a block diagram illustrating configurations of a three-dimensional modeling apparatus and a control apparatus according to a second embodiment.

### DESCRIPTION OF EMBODIMENTS

Hereinafter, embodiments of the present invention will be described with reference to the accompanying drawings. Also, throughout the drawings, the same components will be denoted by the same reference signs and the description thereof will not be repeated.

Note that, in the description below, a control unit 140 of a three-dimensional modeling apparatus 10 and a control unit 500 of a control apparatus 50 are shown as blocks in functional units instead of configurations in hardware units unless specifically described. The control unit 140 of the three-dimensional modeling apparatus 10 and the control unit 500 of the control apparatus 50 are realized by any combination of hardware and software based on a CPU, a memory, a program for realizing the components in this diagram that is loaded onto the memory, storage media such as a hard disk for storing the program, and an interface for network connection of any computer. Further, there are various modified examples for realization methods and apparatuses.

### (First Embodiment)

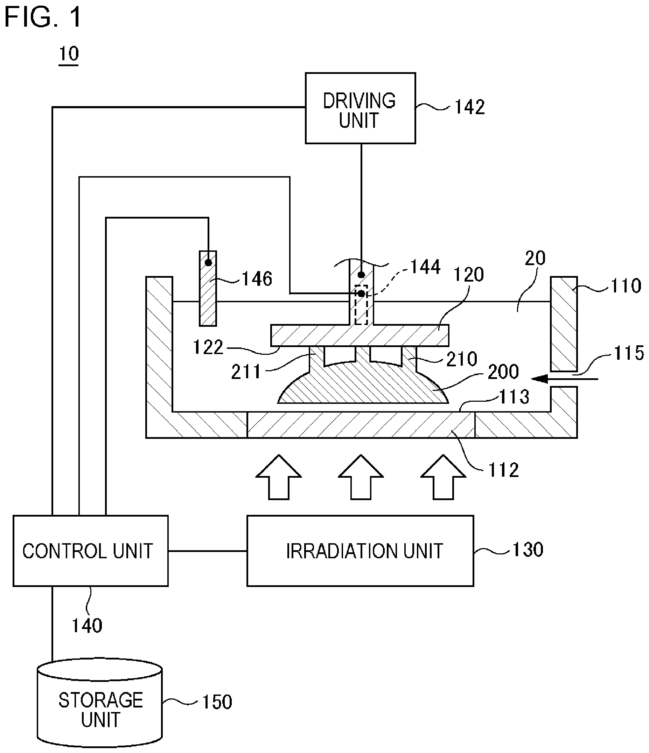

Fig. 1 is a diagram illustrating a configuration of a three-dimensional modeling apparatus 10 according to a first embodiment. The three-dimensional modeling apparatus 10 according to the embodiment includes a container 110, a carrier 120, an irradiation unit 130, and a control unit 140. The container 110 accommodates a photocurable composition 20 and at least a part of which includes a light transmission portion 112. The carrier 120 is configured to face the surface 113 of the light transmission portion 112, and to have the variable distance with respect to the light transmission portion 112. The irradiation unit 130 irradiates the photocurable composition 20 with light via the light transmission portion 112. The control unit 140 controls a position of the carrier 120 and the irradiation unit 130 to form a modeled object 200 obtained by curing the photocurable composition 20. Here, the control unit 140 irradiates the photocurable composition 20 with light from the irradiation unit 130 while continuously or intermittently changing a distance between the carrier 120 and the light transmission portion 112 to form the modeled object 200 and a support portion 210 that connects the carrier 120 and the modeled object 200. In addition, the control unit 140 controls a modeling condition to make a modeling condition when modeling a joint portion 211 of the support portion 210 with the carrier 120 be a condition in which the photocurable composition 20 is easily cured rather than a modeling condition when modeling a first region, in which an area of a cross section parallel to the surface 113 of the light transmission portion 112 is the largest, in the modeled object 200. Description will be performed in detail below.

The three-dimensional modeling apparatus 10 is an apparatus that cures the photocurable composition 20 based on three-dimensional data indicating a shape of the modeled object 200 to form the modeled object 200. The modeled object 200 is not particularly limited and may be at least one of a dental object and a medical object. In modeling of the dental object and the medical object, it is necessary to precisely model shapes according to individual users. Therefore, the use of the three-dimensional modeling apparatus 10 is suitable for modeling the dental object or the medical object.

The photocurable composition 20 is, for example, a resin composition having fluidity, and includes one or more selected from the group consisting of an acrylic resin, a methacrylic resin, a styrene resin, an epoxy resin, a urethane resin, an acrylate resin, an epoxy acrylate hybrid resin, an epoxy oxetane acrylate hybrid resin, a urethane acrylate resin, a methacrylate resin, a urethane methacrylate resin, and monomers of the resins. In addition, the curable composition 20 may include a polymerization initiator, a filler, a pigment, a dye and the like.

The container 110 of the three-dimensional modeling apparatus 10 accommodates the photocurable composition 20. A part of the container 110 is provided with the light transmission portion 112 having a higher light transmissivity than other parts. The light transmission portion 112 is, for example, glass. A surface 113 is a surface provided in a surface of the light transmission portion 112 and on an inner side of the container 110. In the light transmission portion 112, light irradiated from an outside of the container 110 is transmitted to an inside of the container 110 with high efficiency. As a result, the photocurable composition 20 in a vicinity of the surface 113 is cured. In the example of the drawing, the container 110 has a bat shape. Further, the light transmission portion 112 is provided at a bottom of the container 110. In addition, an introduction hole 115 for introducing the photocurable composition 20 is provided at a side surface of the container 110.

The carrier 120 is a member that becomes a base for modeling. A surface 122 of the carrier 120 faces the surface 113 of the light transmission portion 112 in parallel. The three-dimensional modeling apparatus 10 according to the embodiment further includes a driving unit 142 that drives the carrier 120 at least in a direction perpendicular to the surface 113. A distance between the surface 122 and the surface 113 changes by driving the carrier 120.

When modeling the modeled object 200 and the support portion 210, the photocurable composition 20 cured in the vicinity of the surface 113 is laminated on the surface 122 of the carrier 120. Further, a three-dimensional structure is formed on the surface 122 by repeatedly curing and laminating the photocurable composition 20 while widening the distance between the surface 122 and the surface 113. Note that, in the drawing, the modeled object 200 illustrates a structure in the middle of the modeling.

The carrier 120 is configured to include, for example, metal. Examples of the metal includes aluminum and stainless steel. In addition, the carrier 120 may include a surface layer. Examples of the surface layer includes an oxide layer of the above-mentioned metal, a hard coat layer obtained by curing the curable composition, a coating layer, and a resin layer. Examples of the resin layer includes polyethylene terephthalate (PET), polypropylene (PP), and the like. The resin layer can be formed on the carrier 120 by attaching, for example, a film or a sheet. In addition, a roughening treatment may be performed on a surface of the carrier 120. If so, a joint intensity between the carrier 120 and the support portion 210 can be increased by anchor effect. Examples of the roughening treatment includes sandblasting, hairline finishing, or the like.

Specifically, when the modeled object 200 is at least one of a dental object and a medical object, it is preferable that the light transmission portion 112 has an oxide layer as a surface layer, for example, an anodized layer in order to suppress contamination of the modeled object 200 by a foreign matter due to the carrier 120.

The irradiation unit 130 is configured to include, for example, a light source and an optical drawing system. Although the light source is not particularly limited, the light source may include, for example, an ultraviolet light source, an incandescent lamp, a fluorescent lamp, a phosphorescent lamp, a laser diode, or a light emitting diode. Although the optical drawing system is not particularly limited, the optical drawing system includes at least one of, for example, a mask, a spatial light modulator, a micro mirror device, and a micro electro mechanical systems (MEMS) mirror array. In addition, the irradiation unit 130 includes a light source and a driving apparatus for the optical drawing system, and performs light irradiation on the photocurable composition 20 under the control of the control unit 140. The irradiation unit 130 may further include optical components such as a lens and a shutter.

In the irradiation unit 130, the light transmission portion 112 is irradiated with light from the light source via the optical drawing system. When light output from the irradiation unit 130 is a light beam, the light irradiation region is scanned with the light beam, and the photocurable composition 20 in the scanned light irradiation region is cured. In addition, light may be simultaneously projected onto a whole or a part of the light irradiation region from the irradiation unit 130.

The control unit 140 controls the irradiation unit 130 and the driving unit 142. The three-dimensional modeling apparatus 10 further includes a storage unit 150, and the storage unit 150 holds information indicating a three-dimensional shape of a structure to be modeled in advance. The control unit 140 reads the information indicating the three-dimensional shape from the storage unit 150, and generates light irradiation information including information indicating a plurality of light irradiation regions. Here, each light irradiation region is a region, on which the light irradiation should be performed, by the irradiation unit 130, and corresponds to a cross-sectional shape parallel to the surface 113 of the structure to be modeled. Further, the light irradiation information includes information indicating the plurality of light irradiation regions, together with information indicating an order of the light irradiation. Note that, the light irradiation information is not limited to be generated by the control unit 140, and may be generated on the outside in advance and held in the storage unit 150.

The control unit 140 controls the irradiation unit 130 such that the light irradiation is sequentially performed on the light irradiation regions based on the light irradiation information. In addition, the control unit 140 controls the driving unit 142 to change the distance between the surface 122 and the surface 113 according to a light irradiation timing of each light irradiation region. As a result, the modeled object 200 and the support portion 210 are formed between the carrier 120 and the surface 113.

Note that, the distance between the surface 122 and the surface 113 may change continuously or intermittently. When the distance changes intermittently, the control unit 140 widens the distance corresponding to one layer according to a switching timing of the light irradiation regions. When a plurality of layers are formed in this manner, the support portion 210 and the modeled object 200 are obtained as a laminated structure. The amount of change in the distance corresponding to one layer is, for example, equal to or larger than 30 µm and equal to or less than 100 µm. On the other hand, when the distance changes continuously, the control unit 140 switches the light irradiation region according to a changing speed of the distance and a curing speed of the photocurable composition 20. In this manner, the modeled object 200 having a smooth surface rather than a case where the distance changes intermittently may be obtained.

The three-dimensional modeling apparatus 10 according to the embodiment further includes a first temperature adjustment unit 144 that adjusts a temperature of the carrier 120. The first temperature adjustment unit 144 is a heater or a cooling apparatus provided on the carrier 120. The cooling apparatus is, for example, an apparatus that performs cooling by blowing, a Peltier element, or water cooling. In addition, the first temperature adjustment unit 144 includes a temperature sensor that detects the temperature of the carrier 120. The control unit 140 can control the temperature of the carrier 120 by controlling the first temperature adjustment unit 144.

The three-dimensional modeling apparatus 10 according to the embodiment further includes a second temperature adjustment unit 146. The second temperature adjustment unit 146 is a heater or a cooling apparatus that can change a temperature of the photocurable composition 20. The cooling apparatus is, for example, an apparatus that performs cooling by blowing, a Peltier element, or water cooling. In addition, the second temperature adjustment unit 146 includes a temperature sensor that detects the temperature of the photocurable composition 20. The control unit 140 can control the temperature of the photocurable composition 20 by controlling the second temperature adjustment unit 146.

However, the three-dimensional modeling apparatus 10 may not include at least one of the first temperature adjustment unit 144 and the second temperature adjustment unit 146.

For example, the control unit 140 can adjust easiness of curing of the photocurable composition 20 by controlling at least any of a light irradiation condition of the irradiation unit 130, the temperature of the control unit 140, and the temperature of the photocurable composition 20 as the modeling condition. The control of the modeling condition will be described later in detail.

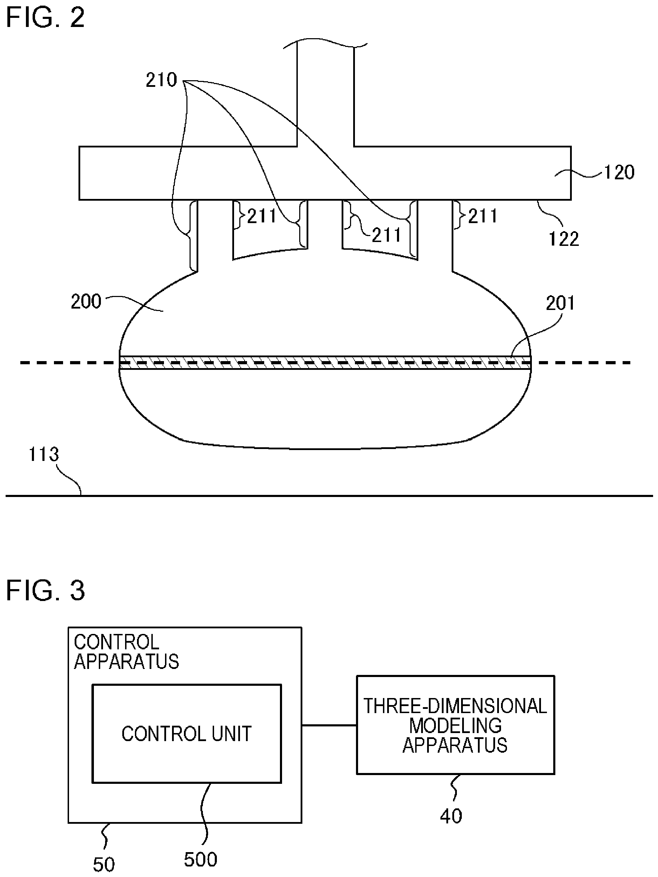

Fig. 2 is a diagram illustrating structures of the modeled object 200 and the support portion 210. The drawing illustrates a relationship between the modeled object 200 and the support portion 210, which are entirely modeled, the carrier 120, and the surface 113. Between the carrier 120 and the surface 113, in addition to the modeled object 200, the support portion 210 that connects the carrier 120 and the modeled object 200 is formed. The support portion 210 is a part that is removed from the modeled object 200 after the light irradiation is completed with respect to all the light irradiation regions. The shape of the support portion 210 is not particularly limited, and is, for example, a column shape or a wall shape. The number of support portions 210 is not particularly limited and may be one or more. In addition, the modeled object 200 may have a part which is directly connected to the carrier 120.

The support portion 210 is the part to be removed and is the part which has a large influence on a shape accuracy of the modeled object 200. For example, when a degree of curing of the support portion 210 is not sufficient, a modeled structure cannot be sufficiently supported, and thus there is a problem in that the structure is inclined, twisted, or warped. Since the light irradiation region is determined on the premise of parallel cross sections facing the same direction, the shape accuracy of the modeled object 200 is impaired in a state in which the inclination or the like occurs.

As described above, when modeling is performed by the three-dimensional modeling apparatus 10, the control unit 140 controls the modeling condition, and thus the easiness of curing of the photocurable composition 20 can be adjusted. For example, there is a case where the modeling condition, in which the photocurable composition 20 is relatively hard to be cured, is set up for a region where reaction is easily accelerated. On the other hand, the support portion 210 needs to be modeled under an easily curable modeling condition in order to maintain the shape accuracy of the modeled obj ect 200. Above all, the joint portion 211 between the support portion 210 and the carrier 120 needs to be modeled under the easily curable modeling condition to secure sufficient rigidity for securing the joint intensity with the carrier 120.

The joint portion 211 is, for example, a region of the support portion 210 within 1 mm from the carrier 120, and, preferably, is a region within 10 µm. However, a part of the support portion 210 on a side of the modeled object 200 rather than the joint portion 211 may also be modeled under the easily curable modeling condition, similarly to the joint portion 211.

Here, when light reflectance of the surface 122 of the carrier 120 is high, the curing of the photocurable composition 20 in the joint portion 211 is promoted by light reflected from the surface 122 in addition to the light directly irradiated from the irradiation unit 130. Therefore, when comparing the joint portion 211 with another region, the degree of curing of the joint portion 211 naturally increases even in a case where the modeling conditions set by the control unit 140 are the same with each other.

On the other hand, as described above, when the carrier 120 includes a surface layer on at least a part of the surface 122 facing the light transmission portion 112, the light reflected from the surface 122 becomes weak. In addition, regardless of the presence or absence of the surface layer, it is difficult to obtain curing acceleration effect when the light reflectance of the surface 122 of the carrier 120, which faces the light transmission portion 112, particularly, the light reflectance of the region of the surface 122, in which the joint portion 211 is formed, is low, for example, when the light reflectance is equal to or less than 10%. Therefore, it is necessary to particularly appropriately control the modeling condition.

Specifically, the control unit 140 controls the modeling condition to make the modeling condition when modeling the joint portion 211 be a condition in which the photocurable composition 20 is easily cured rather than the modeling condition when modeling a first region 201. The first region 201 is a region, in which an area of a cross section parallel to the surface 113 of the light transmission portion 112 is the largest, in the modeled object 200. That is, the first region 201 is a region formed by the light irradiation region having the largest area among the plurality of light irradiation regions for forming the modeled object 200.

Since a large amount of the photocurable composition 20 is cured in the first region 201, a temperature rise occurs due to reaction heat. Therefore, when the modeling is performed under the same modeling conditions as in another region, the cured substance of the photocurable composition 20 is easily attached to the surface 113. In addition, the temperature rise also causes the modeled object 200 to be warped or deformed. As a result, there is a case where the modeling condition when modeling the first region 201 is set as a condition in which the photocurable composition 20 is relatively hard to be cured.

It is possible to avoid a decrease in the rigidity of the joint portion 211 by setting the modeling condition when modeling the joint portion 211 as a condition in which the photocurable composition 20 is easily cured rather than the modeling condition when modeling at least the first region 201. Note that, the joint portion 211 may be further modeled under a condition in which the photocurable composition 20 is easily cured rather than any of the regions of the modeled object 200. By doing so, the rigidity of the joint portion 211 can be further increased.

The control of the modeling condition will be described in detail below. For example, the larger the amount of light irradiation energy from the irradiation unit 130 as the modeling condition, the easier the curing of the photocurable composition 20. Therefore, the control unit 140 can cause the joint portion 211 to be easily cured by causing the amount of light irradiation energy from the irradiation unit 130 when modeling the joint portion 211 to be larger than the amount of light irradiation energy when modeling the first region 201.

Here, the amount of light irradiation energy is determined depending on a light irradiation time and a light irradiation intensity. Therefore, as a first example, the control unit 140 can cause the joint portion 211 to be easily cured by making the light irradiation time from the irradiation unit 130 when modeling the joint portion 211 be longer than the light irradiation time when modeling the first region 201. A method for increasing the light irradiation time by the control unit 140 includes a method for decreasing a scanning speed of the light from the irradiation unit 130, increasing a projection time of the light from the irradiation unit 130, or the like. By doing so, it is possible to increase a time taken to perform the light irradiation on the light irradiation region for modeling the first region 201. Note that, the control unit 140 delays a movement timing of the carrier 120 or decreases a movement speed as the light irradiation time is increased.

In addition, as a second example, the control unit 140 can cause the joint portion 211 to be easily cured by making the light irradiation intensity from the irradiation unit 130 when modeling the joint portion 211 be higher than the light irradiation intensity when modeling the first region 201. An example of a method for increasing the light irradiation intensity by the control unit 140 includes a method for increasing the output intensity of the light source of the irradiation unit 130.

Note that, the control unit 140 may perform both or any one of increasing the light irradiation time and increasing the light irradiation intensity in order to increase the amount of light irradiation energy.

When the three-dimensional modeling apparatus 10 includes the first temperature adjustment unit 144, as a third example, the control unit 140 can cause the joint portion 211 to be easily cured by causing the temperature of the carrier 120 when modeling the joint portion 211 be higher than the temperature of the carrier 120 when modeling the first region 201.

In addition, when the three-dimensional modeling apparatus 10 includes the second temperature adjustment unit 146, as a fourth example, the control unit 140 can cause the joint portion 211 to be easily cured by causing the temperature of the photocurable composition 20 when modeling the joint portion 211 be higher than the temperature of the photocurable composition 20 when modeling the first region 201.

Note that, the control unit 140 may perform only one or a combination of two or more of the above-described first to fourth examples as the control of the modeling condition for causing the joint portion 211 to be easily cured.

In addition, the control unit 140 may change the modeling condition as needed even when modeling a region other than the first region 201 and the joint portion 211. For example, the control unit 140 can control the modeling condition according to a size of the light irradiation region. Specifically, for example, as the light irradiation region is large, the control unit 140 sets the modeling condition as the condition in which the photocurable composition 20 is relatively hard to be cured. In addition, when the area of the light irradiation region is larger than a predetermined reference area, the control unit 140 may set the modeling condition as the condition in which the photocurable composition 20 is hard to be cured. Information indicating the reference area is held in the storage unit 150 in advance, and the control unit 140 can read and use the information for control.

Hereinafter, a method for manufacturing the modeled object 200 according to the embodiment will be described. The method for manufacturing the modeled object 200 according to the embodiment is a method for manufacturing the modeled object 200 using the three-dimensional modeling apparatus 10 as described above.

Prior to modeling, three-dimensional data of the modeled object 200 is held in the storage unit 150. In addition, the light irradiation information for modeling the support portion 210 and the modeled object 200 is generated based on the three-dimensional data of the modeled object 200. Note that, the shape of the support portion 210 can be determined by the user of the three-dimensional modeling apparatus 10 and can be stored in the storage unit 150, together with the three-dimensional data of the modeled object 200.

Further, the carrier 120 is disposed in the vicinity of the light transmission portion 112 of the container 110 in which the photocurable composition 20 is accommodated. At this time, the distance between the surface 122 and the surface 113 is, for example, equal to or larger than 30 µm and is equal to or less than 100 µm.

Next, the control unit 140 causes the light to be irradiated from the irradiation unit 130 toward the light transmission portion 112 so that the light irradiation is performed on an initial light irradiation region based on the light irradiation information. The photocurable composition 20 between the surface 122 and the surface 113 is irradiated with the light from the irradiation unit 130 via the light transmission portion 112. Therefore, the photocurable composition 20 between the surface 122 and the surface 113 is cured into a shape of the light irradiation region and the cured substance adheres to the surface 122.

Subsequently, the control unit 140 sequentially performs the light irradiation on the plurality of light irradiation regions based on the light irradiation information. Furthermore, as described above, the control unit 140 controls the driving unit 142 such that the distance between the surface 122 and the surface 113 is widened. The cured substance of the photocurable composition 20 newly formed by the light irradiation is laminated on the cured substance of the photocurable composition 20 formed immediately before. Note that, the cured substance of the photocurable composition 20 at the stage may be in a semi-cured state.

After the light irradiation is performed on the last light irradiation region, the support portion 210 and the modeled object 200 are removed from the carrier 120. Thereafter, there is a case where the support portion 210 and the modeled object 200 are post-cured. Next, the support portion 210 is removed from the modeled object 200, and thus the modeled object 200 is obtained. Note that, the support portion 210 may be removed from the modeled object 200 before the post-curing is performed.

Next, an operation and effect of the embodiment will be described. According to the embodiment, the control unit 140 controls the modeling condition to make the modeling condition when modeling the joint portion 211 be the condition in which the photocurable composition 20 is easily cured rather than the modeling condition when modeling the first region 201 of the modeled object 200. By doing so, the sufficient intensity of the joint portion 211 is maintained, and the modeled object 200 with the high shape accuracy is obtained.

### (Second Embodiment)

Fig. 3 is a block diagram illustrating configurations of a three-dimensional modeling apparatus 40 and a control apparatus 50 according to a second embodiment. The control apparatus 50 according to the embodiment is a control apparatus of the three-dimensional modeling apparatus 40. The three-dimensional modeling apparatus 40 according to the embodiment is similar to the three-dimensional modeling apparatus 10 according to the first embodiment, and includes a container 110, a carrier 120, and an irradiation unit 130. The container 110 accommodates a photocurable composition 20 and at least a part of which includes a light transmission portion 112. The carrier 120 is configured to face the surface 113 of the light transmission portion 112, and to have the variable distance with respect to the light transmission portion 112. The irradiation unit 130 irradiates the photocurable composition 20 with light via the light transmission portion 112. In addition, the control apparatus 50 includes a control unit 500. The control unit 500 controls a position of the carrier 120 and the irradiation unit 130 to form a modeled object 200 obtained by curing the photocurable composition 20. Here, the control unit 500 irradiates the photocurable composition 20 with light from the irradiation unit 130 while continuously or intermittently changing a distance between the carrier 120 and the light transmission portion 112 to form the modeled object 200 and a support portion 210 that connects the carrier 120 and the modeled object 200. In addition, the control unit 500 controls a modeling condition to make a modeling condition when modeling a joint portion 211 of the support portion 210 with the carrier 120 be a condition in which the photocurable composition 20 is easily cured rather than a modeling condition when modeling a first region 201, in which an area of a cross section parallel to the surface 113 of the light transmission portion 112 is the largest, in the modeled object 200.

The control unit 500 according to the embodiment is the same as the control unit 140 according to the first embodiment.

In the embodiment, the same operation and effect as in the first embodiment can be obtained.

Although the embodiments of the present invention are described hereinabove with reference to the drawings, the embodiments are merely examples of the present invention, and various configurations other than the above may be adopted.

Hereinafter, examples of reference forms will be additionally described.
1-1. A three-dimensional modeling apparatus including
   a container that accommodates a photocurable composition and at least a part of which includes a light transmission portion,
   a carrier that is configured to face a surface of the light transmission portion and to have a variable distance with respect to the light transmission portion,
   an irradiation unit that irradiates the photocurable composition with light via the light transmission portion, and
   a control unit that controls a position of the carrier and the irradiation unit to form a modeled object obtained by curing the photocurable composition,
   in which the control unit
   irradiates the photocurable composition with light from the irradiation unit while continuously or intermittently changing a distance between the carrier and the light transmission portion to form the modeled obj ect and a support portion that connects the carrier and the modeled object, and
   controls a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.
1-2. In the three-dimensional modeling apparatus of 1-1,
   a light reflectance of a region, on which the joint portion is formed, of a surface of the carrier which faces the light transmission portion is equal to or less than 10%.
1-3. In the three-dimensional modeling apparatus of 1-2,
   the carrier has a surface layer on at least a part of the surface which faces the light transmission portion.
1-4. In the three-dimensional modeling apparatus of 1-3,
   the surface layer is an oxide layer.
1-5. In the three-dimensional modeling apparatus of 1-3 or 1-4,
   the modeled obj ect is at least one of a dental obj ect and a medical object.
1-6. In the three-dimensional modeling apparatus of any one of 1-1 to 1-5,
   the joint portion is a region of the support portion within 1 mm from the carrier.
1-7. In the three-dimensional modeling apparatus of any one of 1-1 to 1-6,
   the control unit causes the amount of light irradiation energy from the irradiation unit when modeling the joint portion to be larger than the amount of light irradiation energy when modeling the first region.
1-8. In the three-dimensional modeling apparatus of 1-7,
   the control unit causes a light irradiation time from the irradiation unit when modeling the joint portion to be longer than the light irradiation time when modeling the first region.
1-9. In the three-dimensional modeling apparatus of 1-7 or 1-8,
   the control unit causes a light irradiation intensity from the irradiation unit when modeling the joint portion to be higher than the light irradiation intensity when modeling the first region.
1-10. In the three-dimensional modeling apparatus of any one of 1-1 to 1-9,
   the control unit causes a temperature of the carrier when modeling the joint portion to be higher than the temperature of the carrier when modeling the first region.
1-11. In the three-dimensional modeling apparatus of any one of 1-1 to 1-10,
   the control unit causes a temperature of the photocurable composition when modeling the joint portion to be higher than the temperature of the photocurable composition when modeling the first region.
2-1. A control apparatus of a three-dimensional modeling apparatus,
   in which the three-dimensional modeling apparatus includes
   a container that accommodates a photocurable composition and at least a part of which includes a light transmission portion,
   a carrier that is configured to face a surface of the light transmission portion and to have a variable distance with respect to the light transmission portion, and
   an irradiation unit that irradiates the photocurable composition with light via the light transmission portion,
   the control apparatus including a control unit that controls a position of the carrier and the irradiation unit to form a modeled object by curing the photocurable composition,
   in which the control unit
   irradiates the photocurable composition with light from the irradiation unit while continuously or intermittently changing a distance between the carrier and the light transmission portion to form the modeled object and a support portion that connects the carrier and the modeled object, and
   controls a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.
2-2. In the control apparatus of 2-1,
   a light reflectance of a region, on which the joint portion is formed, of a surface of the carrier which faces the light transmission portion is equal to or less than 10%.
2-3. In the control apparatus of 2-2,
   the carrier has a surface layer on at least a part of the surface which faces the light transmission portion.
2-4. In the control apparatus of 2-3,
   the surface layer is an oxide layer.
2-5. In the control apparatus of 2-3 or 2-4,
   the modeled object is at least one of a dental object and a medical object.
2-6. In the control apparatus of any one of 2-1 to 2-5,
   the joint portion is a region of the support portion within 1 mm from the carrier.
2-7. In the control apparatus of any one of 2-1 to 2-6,
   the control unit causes an amount of light irradiation energy from the irradiation unit when modeling the joint portion to be larger than an amount of light irradiation energy when modeling the first region.
2-8. In the control apparatus of 2-7,
   the control unit causes a light irradiation time from the irradiation unit when modeling the joint portion to be longer than the light irradiation time when modeling the first region.
2-9. In the control apparatus of 2-7 or 2-8,
   the control unit causes a light irradiation intensity from the irradiation unit when modeling the joint portion to be higher than the light irradiation intensity when modeling the first region.
2-10. In the control apparatus of any one of 2-1 to 2-9,
   the control unit causes a temperature of the carrier when modeling the joint portion to be higher than the temperature of the carrier when modeling the first region.
2-11. In the control apparatus of any one of 2-1 to 2-10,
   the control unit causes a temperature of the photocurable composition when modeling the joint portion to be higher than the temperature of the photocurable composition when modeling the first region.
3-1. A method for manufacturing a modeled object using a three-dimensional modeling apparatus,
   in which the three-dimensional modeling apparatus includes
   a container that accommodates a photocurable composition and at least a part of which includes a light transmission portion,
   a carrier that is configured to face a surface of the light transmission portion and to have a variable distance with respect to the light transmission portion,
   an irradiation unit that irradiates the photocurable composition with light via the light transmission portion, and
   a control unit that controls a position of the carrier and the irradiation unit to form the modeled object obtained by curing the photocurable composition, the method including
   by the control unit
   irradiating the photocurable composition with light from the irradiation unit while continuously or intermittently changing a distance between the carrier and the light transmission portion to form the modeled object and a support portion that connects the carrier and the modeled object, and
   controlling a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.
3-2. In the method for manufacturing a modeled object of 3-1,
   a light reflectance of a region, on which the joint portion is formed, of a surface of the carrier, which faces the light transmission portion is equal to or less than 10%.
3-3. In the method for manufacturing a modeled object of 3-2,
   the carrier has a surface layer on at least a part of the surface which faces the light transmission portion.
3-4. In the method for manufacturing a modeled object of 3-3,
   the surface layer is an oxide layer.
3-5. In the method for manufacturing a modeled object of 3-3 or 3-4,
   the modeled obj ect is at least one of a dental obj ect and a medical object.
3-6. In the method for manufacturing a modeled object of any one of 3-1 to 3-5,
   the joint portion is a region of the support portion within 1 mm from the carrier.
3-7. In the method for manufacturing a modeled object of any one of 3-1 to 3-6,
   the control unit causes an amount of light irradiation energy from the irradiation unit when modeling the joint portion to be larger than an amount of light irradiation energy when modeling the first region.
3-8. In the method for manufacturing a modeled object of 3-7,
   the control unit causes a light irradiation time from the irradiation unit when modeling the joint portion to be longer than the light irradiation time when modeling the first region.
3-9. In the method for manufacturing a modeled object of 3-7 or 3-8,
   the control unit causes a light irradiation intensity from the irradiation unit when modeling the joint portion to be higher than the light irradiation intensity when modeling the first region.
3-10. In the method for manufacturing a modeled object of any one of 3-1 to 3-9,
   the control unit causes a temperature of the carrier when modeling the joint portion to be higher than the temperature of the carrier when modeling the first region.
3-11. In the method for manufacturing a modeled object of any one of 3-1 to 3-10,
   the control unit causes a temperature of the photocurable composition when modeling the joint portion to be higher than the temperature of the photocurable composition when modeling the first region.

This application claims the priority on the basis of Japanese application Japanese Patent Application No. 2018-128070 for which it applied on July 5, 2018, and takes in those the indications of all here.

## Claims

1. A three-dimensional modeling apparatus comprising:
a container that accommodates a photocurable composition and at least a part of which includes a light transmission portion;
a carrier that is configured to face a surface of the light transmission portion and to have a variable distance with respect to the light transmission portion;
an irradiation unit that irradiates the photocurable composition with light via the light transmission portion; and
a control unit that controls a position of the carrier and the irradiation unit to form a modeled object obtained by curing the photocurable composition,
wherein the control unit
irradiates the photocurable composition with light from the irradiation unit while continuously or intermittently changing a distance between the carrier and the light transmission portion to form the modeled object and a support portion that connects the carrier and the modeled object, and
controls a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.

2. The three-dimensional modeling apparatus according to claim 1,
wherein a light reflectance of a region, on which the joint portion is formed, of a surface of the carrier which faces the light transmission portion is equal to or less than 10%.

3. The three-dimensional modeling apparatus according to claim 2,
wherein the carrier has a surface layer on at least a part of the surface which faces the light transmission portion.

4. The three-dimensional modeling apparatus according to claim 3,
wherein the surface layer is an oxide layer.

5. The three-dimensional modeling apparatus according to claim 3 or 4,
wherein the modeled object is at least one of a dental object and a medical object.

6. The three-dimensional modeling apparatus according to any one of claims 1 to 5,
wherein the joint portion is a region of the support portion within 1 mm from the carrier.

7. The three-dimensional modeling apparatus according to any one of claims 1 to 6,
wherein the control unit causes an amount of light irradiation energy from the irradiation unit when modeling the joint portion to be larger than an amount of light irradiation energy when modeling the first region.

8. The three-dimensional modeling apparatus according to claim 7,
wherein the control unit causes a light irradiation time from the irradiation unit when modeling the joint portion to be longer than the light irradiation time when modeling the first region.

9. The three-dimensional modeling apparatus according to claim 7 or 8,
wherein the control unit causes a light irradiation intensity from the irradiation unit when modeling the joint portion to be higher than the light irradiation intensity when modeling the first region.

10. The three-dimensional modeling apparatus according to any one of claims 1 to 9,
wherein the control unit causes a temperature of the carrier when modeling the joint portion to be higher than the temperature of the carrier when modeling the first region.

11. The three-dimensional modeling apparatus according to any one of claims 1 to 10,
wherein the control unit causes a temperature of the photocurable composition when modeling the joint portion to be higher than the temperature of the photocurable composition when modeling the first region.

12. A control apparatus of a three-dimensional modeling apparatus,
in which the three-dimensional modeling apparatus comprises
a container that accommodates a photocurable composition and at least a part of which includes a light transmission portion,
a carrier that is configured to face a surface of the light transmission portion and to have a variable distance with respect to the light transmission portion, and
an irradiation unit that irradiates the photocurable composition with light via the light transmission portion,
the control apparatus comprising:
a control unit that controls a position of the carrier and the irradiation unit to form a modeled object by curing the photocurable composition,
wherein the control unit
irradiates the photocurable composition with light from the irradiation unit while continuously or intermittently changing a distance between the carrier and the light transmission portion to form the modeled object and a support portion that connects the carrier and the modeled object, and
controls a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.

13. A method for manufacturing a modeled object using a three-dimensional modeling apparatus,
in which the three-dimensional modeling apparatus comprises
a container that accommodates a photocurable composition and at least a part of which includes a light transmission portion,
a carrier that is configured to face a surface of the light transmission portion and to have a variable distance with respect to the light transmission portion,
an irradiation unit that irradiates the photocurable composition with light via the light transmission portion, and
a control unit that controls a position of the carrier and the irradiation unit to form the modeled object obtained by curing the photocurable composition, the method comprising:
by the control unit
irradiating the photocurable composition with light from the irradiation unit while continuously or intermittently changing a distance between the carrier and the light transmission portion to form the modeled object and a support portion that connects the carrier and the modeled object; and
controlling a modeling condition to make the modeling condition when modeling a joint portion of the support portion with the carrier be a condition in which the photocurable composition is easily cured compared to the modeling condition when modeling a first region, in which an area of a cross section parallel to the surface of the light transmission portion is the largest, in the modeled object.
